(19) Europäisches Patentamt
European Patent Office
Office européen des brevets

(11) **EP 4 651 244 A1**

(12) # EUROPEAN PATENT APPLICATION
published in accordance with Art. 153(4) EPC

(43) Date of publication:
**19.11.2025 Bulletin 2025/47**

(21) Application number: **23916086.4**

(22) Date of filing: **14.09.2023**

(51) International Patent Classification (IPC):
$H01M\ 8/0284^{(2016.01)}$    $B32B\ 27/32^{(2006.01)}$
$C08J\ 5/18^{(2006.01)}$    $C08L\ 23/20^{(2025.01)}$
$C08L\ 101/00^{(2006.01)}$    $H01M\ 8/0273^{(2016.01)}$
$H01M\ 8/10^{(2016.01)}$

(52) Cooperative Patent Classification (CPC):
**B32B 27/32; C08J 5/18; C08L 23/20; C08L 101/00;
H01M 8/0273; H01M 8/0284; H01M 8/10;
Y02E 60/50**

(86) International application number:
**PCT/JP2023/033528**

(87) International publication number:
**WO 2024/150466 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 JP 2023001533**

(71) Applicant: **Toyobo Co., Ltd.
Kita-ku
Osaka-shi, Osaka 530-0001 (JP)**

(72) Inventors:
• **OYAMATSU,Atsushi
Otsu-shi, Shiga 520-0292 (JP)**
• **WATANABE,Shigeyuki
Otsu-shi, Shiga 520-0292 (JP)**
• **KOBAYASHI,Kyohei
Otsu-shi, Shiga 520-0292 (JP)**

(74) Representative: **Vossius & Partner
Patentanwälte Rechtsanwälte mbB
Siebertstrasse 3
81675 München (DE)**

(54) **FILM AND REINFORCEMENT MEMBER FOR ELECTROLYTE MEMBRANES OF POLYMER ELECTROLYTE FUEL CELLS USING SAME**

(57)    Provided are a film having not only excellent high-temperature mechanical properties and high-temperature hydrolysis resistance but also good thickness uniformity and punching processability, and a reinforcement member for electrolyte membranes of solid polymer fuel cells using the film. The film according to the present invention contains at least one layer A that contains a polymer A1 containing 90 mol% or more of a structural unit derived from 4-methyl-1-pentene with respect to all units and having a melting point of 240°C or higher and a resin A2 having a glass transition temperature of 170°C or higher in a total amount of 90% by mass or more. The mass ratio A1/A2 of the polymer A1 to the resin A2 is within a range of 95/5 to 50/50.

**EP 4 651 244 A1**

**Description**

TECHNICAL FIELD

The present invention relates to a film containing a blend of a polymethylpentene-based resin, and a reinforcement member for electrolyte membranes of solid polymer fuel cells using the same.

BACKGROUND ART

A fuel cell is a cell in which electrodes are disposed on both surfaces of an electrolyte membrane, and power is generated by an electrochemical reaction between hydrogen and oxygen. Since only water is generated during power generation, the fuel cell has attracted attention as a clean energy system. In particular, a solid polymer fuel cell has advantages that the solid polymer fuel cell has a relatively low operating temperature and a short starting time, and therefore is expected to be widely used as a battery for moving bodies such as an automobile and a ship. However, since an expensive platinum-based catalyst is required for the electrode of the solid polymer fuel cell, the solid polymer fuel cell is still expensive, and a reduction in producing cost is desired.

Since the fuel cell can be increased in power density and downsized by raising the operating temperature, it has been studied to raise a maximum operating temperature as one of measures to lower the price. The typical maximum operating temperature of the solid polymer fuel cell is 90 to 95°C, but the maximum operating temperature will be about 120°C in the future, and a resin member used for the fuel cell is required to have improved high-temperature long-term durability (high-temperature hydrolysis resistance) in the presence of water (see NEDO Technology Development Roadmap (fuel cell for HDEV) published in 2022 https://www.nedo.go.jp/library/battery_hydrogen.html).

In the solid polymer fuel cell, a cell in which a jointed body of an electrode and an electrolyte membrane made of a solid polymer and reinforced by a resin reinforcement frame, a gas diffusion layer, and the like are sandwiched by two separators made of a metal or the like serves as a power generation unit. The reinforcement frame and the separator are generally bonded with a hot melt adhesive. If the melting point of the hot melt adhesive is not sufficiently higher than the operating temperature of the fuel cell, the adhesive may melt during operation, leading to leakage of hydrogen and oxygen. Therefore, when the operating temperature is about 120°C, it is necessary that the melting point of the hot melt adhesive is at least 150°C or higher, and the adhesion processing temperature is further raised to 170 to 180°C in order to sufficiently melt the adhesive. Therefore, the reinforcement frame is also required to be improved in high-temperature mechanical properties at around 170 to 180°C.

As a film used for such a reinforcement frame, for example, Patent Document 1 discloses that a reinforcement frame for mechanically reinforcing an electrolyte membrane is provided in the peripheral portion of a fuel cell, and a biaxially stretched film of polyethylene naphthalene dicarboxylate (PEN) is used as the reinforcement frame. However, a high-temperature long-term durability time at 121°C and 100%RH was at most about 200 hours, and was not sufficient for the above requirements.

Meanwhile, a polymethylpentene-based resin is a substance having excellent high-temperature long-term durability, and has good heat resistance among polyolefin-based resins, and thus is used for various applications assuming a relatively high temperature.

For example, Patent Document 2 proposes that a polymethylpentene-based resin is used as a release layer of a release film. This document discloses that the storage elastic modulus E' of the release layer at 175°C is 30 MPa or more and 80 MPa or less. However, when the storage elastic modulus is in this range, it cannot be said that high-temperature mechanical properties are sufficient for applications in which adhesion processing at a high temperature as described above is performed.

Patent Document 3 proposes, as a release layer of a release sheet for producing synthetic leather, a release layer containing, as a main component, a cyclic olefin-based resin composition containing a cyclic olefin-based resin having a glass transition temperature of 150°C or higher and a polymethylpentene-based resin. This document discloses that the storage elastic modulus E' of the cyclic olefin-based resin composition at 150°C is 100 MPa or more.

Furthermore, Patent Document 4 discloses that it is preferable to use one or more selected from the group consisting of polyethylene naphthalate (PEN), a cycloolefin polymer, a cycloolefin copolymer, and a methylpentene polymer as a substrate layer of a laminated body including a first surface layer, a first intermediate layer, the substrate layer, a second intermediate layer, and a second surface layer.

PRIOR ART DOCUMENTS

PATENT DOCUMENTS

Patent Document 1: JP-B-4944419
Patent Document 2: JP-A-2021-194871
Patent Document 3: JP-A-2009-279838
Patent Document 4: JP-A-2018-135467

## SUMMARY OF THE INVENTION

### PROBLEMS TO BE SOLVED BY THE INVENTION

However, according to the study of the present inventors, it has been found that when a film is formed by blending a polymethylpentene-based resin having a melting point that is not sufficiently high (for example, a melting point of lower than 240°C) with a cyclic olefin-based resin having a glass transition temperature of 150°C or higher as in the invention of Patent Document 3, the thickness unevenness of the film is apt to occur due to miscibility, compatibility, and the like during melting. The thickness unevenness of the film has a problem that adhesion failure or the like is apt to occur particularly when the film is used as a reinforcement member for electrolyte membranes of solid polymer fuel cells in which a large number of power generation units are laminated.

According to the study of the present inventors, it has been found that when a film is formed using a cycloolefin copolymer having a glass transition temperature of 150°C or higher alone as described in Examples of Patent Document 4, the punching processability (particularly, occurrence of burrs) of the film is apt to be deteriorated. Such deterioration in the punching processability of the film is apt to cause a problem of deterioration in productivity and the like particularly when a reinforcement member for electrolyte membranes is processed into a frame shape.

Therefore, an object of the present invention is to provide a film having not only excellent high-temperature mechanical properties and high-temperature hydrolysis resistance but also good thickness uniformity and punching processability, and a reinforcement member for electrolyte membranes of solid polymer fuel cells using the film.

### MEANS FOR SOLVING THE PROBLEMS

As a result of intensive studies to solve the above problems, the present inventors have found that the above object can be achieved by forming a film using a blend containing a specific polymethylpentene-based resin and a resin having a glass transition temperature of 170°C or higher at a specific mass ratio, thereby completing the present invention.

That is, the present invention includes the following contents.

[1] A film comprising at least one layer A that contains a polymer A1 containing 90 mol% or more of a structural unit derived from 4-methyl-1-pentene with respect to all units and having a melting point of 240°C or higher and a resin A2 having a glass transition temperature of 170°C or higher in a total amount of 90% by mass or more, wherein a mass ratio A1/A2 of the polymer A1 to the resin A2 is within a range of 95/5 to 50/50.

[2] The film according to [1], wherein before and after the layer A is retained at 120°C and 100%RH, a time during which a retention rate of a maximum stress measured by a tensile test with respect to an initial value is 60% is 2000 hours or more for at least one direction in a film in-plane direction.

[3] The film according to [1] or [2], wherein the resin A2 is a cyclic olefin-based resin.

[4] The film according to any one of [1] to [3], wherein the mass ratio A1/A2 is within a range of 95/5 to 87/13.

[5] The film according to any one of [1] to [4], further comprising at least one heat-sealable layer.

[6] The film according to any one of [1] to [5], wherein the film is used for a reinforcement member for electrolyte membranes of solid polymer fuel cells for reinforcing an outer peripheral edge portion of an electrolyte membrane of a solid polymer fuel cell.

[7] A reinforcement member for electrolyte membranes of solid polymer fuel cells for reinforcing an outer peripheral edge portion of an electrolyte membrane of a solid polymer fuel cell, the reinforcement member comprising the film according to any one of [1] to [6].

### EFFECT OF THE INVENTION

According to the present invention, it is possible to provide a film having not only excellent high-temperature mechanical properties and high-temperature hydrolysis resistance but also good thickness uniformity and punching processability, and a reinforcement member for electrolyte membranes of solid polymer fuel cells using the film.

The details of the reason why the specific polymethylpentene-based resin and the resin having a glass transition temperature of 170°C or higher are contained at a specific mass ratio, to particularly improve the thickness uniformity and the punching processability are not clear, but are considered as follows.

That is, it is considered that by using the polymer A1 containing 90 mol% or more of a structural unit derived from 4-methyl-1-pentene and having a melting point of 240°C or higher, the dispersibility and the like of the polymer A1 with respect to the resin A2 having a glass transition temperature of 170°C or higher are improved as compared with a case of more copolymerization components, and therefore the thickness uniformity tends to be improved. The polymer A1 is also excellent in releasability, and it is considered that the punching processability is further improved by using the polymer A1 at a mass ratio of a certain level or more.

BRIEF DESCRIPTION OF THE DRAWINGS

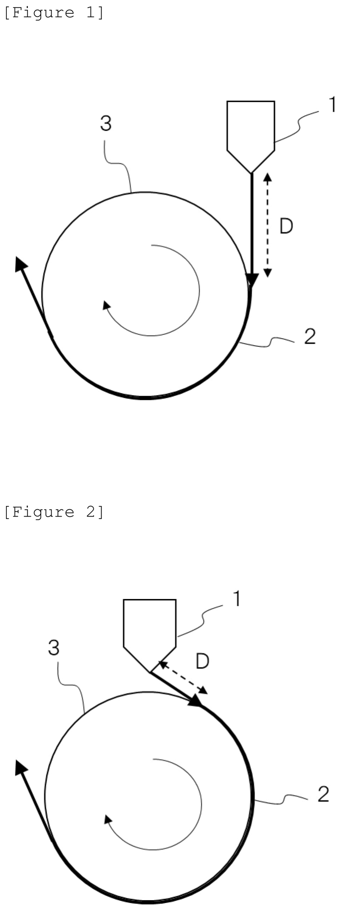

Fig. 1A is a schematic view showing the vicinity of a die to a cooling roll of an example of a vertical drop type film forming machine that can be used in the present invention.
Fig. 1B is a schematic view showing the vicinity of a die to a cooling roll of an example of an oblique drop type film forming machine that can be used in the present invention.

MODE FOR CARRYING OUT THE INVENTION

Hereinafter, the present invention will be described in detail. For convenience of description, the formation direction of a film may be referred to as a mechanical axis direction, a vertical direction, a machine direction or an MD direction, and a direction perpendicular to the film formation direction and a thickness direction may be referred to as a transverse direction, a lateral direction, or a TD direction. Various physical properties and the like described in the present specification are specifically measured by methods described in Examples.

[Film]

The film of the present invention includes at least one layer A that contains a polymer A1 and a resin A2 in a total amount of 90% by mass or more, and may include two or more layers A. The film may include a layer B, a layer A, and a layer B in this order, wherein the layer A is a substrate layer, and the layer B is a heat-sealable layer. Furthermore, a C layer which is an intermediate layer (easily adhesive layer or the like) may be included, wherein a layer B, a layer C, a layer A, a layer C, and a layer B are included in this order.

At least two layers of the layer A, the layer B, and the layer C may be laminated by coextrusion, or all the layers may be laminated by coextrusion.

The film of the present invention may be either a cast film or a stretched film stretched uniaxially or biaxially, but a cast film is preferable from the viewpoint of easy production and inexpensive production equipment and the like. Here, the term "cast" refers to a state where the film is not stretched 1.2 times or more in any direction by a stretching step such as inter-roll stretching or stretching by a tenter, and is preferably a state where the film is not stretched 1.1 times or more in any direction.

In the case of the stretched film, at least in a stretching direction, a storage elastic modulus measured in a tensile mode at 175°C can be set to a value higher than that of the cast film. A stretch ratio in a case of performing uniaxial stretching is 1.2 times or more and 5.0 times or less, and a stretch ratio in a case of performing biaxial stretching is 1.2 times or more and 5.0 times or less in the MD direction and 1.2 times or more and 5.0 times or less in the TD direction.

Furthermore, the film of the present invention may include other layers, and for example, a protective film, a release film, a cover film, and the like may be provided on the surface side of the layer B. Furthermore, an intermediate layer and an easily adhesive layer and the like having a composition different from that of the layer C may be included between the layer B and the layer C. As in the laminated film including the layer B, the layer C, the layer A, the layer C, the layer A, the layer C, and the layer B, a layer configuration repeatedly including the layer C and the layer A can also be adopted. Hereinafter, the configuration of each layer will be described.

[Layer A]

A resin contained in a resin composition constituting the layer A preferably has no functional group that serves as a reaction point of water molecules in order to have durability in a severe moist-heat environment, and preferably has a high melting point or a high glass transition temperature in order to withstand heat during bonding or heat due to the environment.

In the present invention, from such a viewpoint, as a main component of the resin composition constituting the layer A, a polymer A1 containing 90 mol% or more of a constitutional unit derived from 4-methyl-1-pentene and having a melting point of 240°C or higher is used, and a resin A2 having a glass transition temperature of 170°C or higher is used in combination in order to enhance high-temperature mechanical properties at 170 to 180°C.

The polymer A1 and the resin A2 may be contained in the layer A in a total amount of 90% by mass or more, but are preferably contained in the A layer in an amount of 100% by mass or less or 95% by mass or more, more preferably 100% by mass or less or 98% by mass or more, and most preferably 100% by mass, from the viewpoint of enhancing high-temperature hydrolysis resistance and high-temperature mechanical properties at 170 to 180°C. When the content is within such a range, an effect of improving heat resistance provided by a 4-methyl-1-pentene-based polymer is easily obtained, and a film having improved high-temperature mechanical properties at 170 to 180°C is easily obtained.

The mass ratio A1/A2 of the polymer A1 to the resin A2 may be within a range of 95/5 to 50/50, but is preferably within a range of 95/5 to 80/20, and most preferably within a range of 95/5 to 87/13. When the content is within such a range, an effect of improving heat resistance provided by a 4-methyl-1-pentene-based polymer is easily obtained, and a film having good punching processability is easily obtained.

The layer A may contain less than 10% by mass of other resin A3, but for the same reason, the layer A preferably contains the resin A3 in an amount of 0% by mass or more and less than 5% by mass, more preferably 0% by mass or more and less than 2% by mass, and most preferably does not contain the other resin A3.

[Polymer A1]

The polymer A1 contains 90 mol% or more and 100 mol% or less of a constitutional unit derived from 4-methyl-1-pentene with respect to all constitutional units. The polymer A1 preferably contains 92 mol% or more and 100 mol% or less, more preferably 95 mol% or more and 100 mol% or less, and most preferably 100 mol% of the constitutional unit.

The polymer A1 may further contain 0 mol% or more and less than 10 mol% of a constitutional unit derived from an $\alpha$-olefin other than 4-methyl-1-pentene, preferably 0 mol% or more and less than 8 mol%, and more preferably 0 mol% or more and less than 5 mol% with respect to all the constitutional units.

That is, examples of the polymer A1 include, in addition to a homopolymer obtained by polymerizing 4-methyl-1-pentene as a monomer, a copolymer obtained by copolymerizing 90 mol% or more of 4-methyl-1-pentene as a monomer and less than 10 mol% of an $\alpha$-olefin other than 4-methyl-1-pentene as a monomer.

When the polymer A1 is the copolymer, the monomer to be copolymerized is preferably an $\alpha$-olefin having 2 or more and 20 or less carbon atoms. Examples of the $\alpha$-olefin to be copolymerized include one or more of ethylene, propylene, 1-butene, 1-hexene, 1-octene, 1-decene, 1-tetradecene, and 1-octadecene and the like.

The melting point $T_{mA1}$ of the polymer A1 is 240°C or higher, preferably 241°C or higher and 250°C or lower, and more preferably 242°C or higher and 245°C or lower. The melting point $T_{mA1}$ of the polymer A1 can be controlled by controlling stereoregularity, or by controlling the type and content of a monomer to be copolymerized.

[Resin A2]

The resin A2 has moderate compatibility and dispersibility with the polymer A1, and is not particularly limited as long as the resin A2 has a glass transition temperature of 170°C or higher. Examples thereof include a cyclic olefin-based resin, a polyphenylene ether-based resin (PPE), a polyphenyl sulfone-based resin (PPSU), a polysulfone-based resin (PSU), a polyether sulfone-based resin (PESU), and a polyether imide-based resin (PEI).

Among them, a cyclic olefin-based resin and a polyphenylene ether-based resin are preferable, and a cyclic olefin-based resin is most preferable, from the viewpoint of stability in blending with the polymer A1 and melt-kneading and extruding at a common temperature. If the stability in melt-kneading and extruding is not sufficient, the thickness unevenness of the film tends to be deteriorated, or the black-deteriorated foreign matters of the resin tend to occur and be mixed in the film.

Examples of the cyclic olefin-based resin having a glass transition temperature of 170°C or higher include a cycloolefin copolymer (COC) obtained by copolymerizing norbornenes and an $\alpha$-olefin such as ethylene, and a homopolymer of norbornenes.

As the cycloolefin copolymer (COC), TOPAS 6017S (glass transition temperature: 178°C) manufactured by Polyplastics Co., Ltd. and the like are commercially available. As the norbornene homopolymer, polynorbornene (glass transition temperature: ≥ 250°C) manufactured by Sumitomo Bakelite Co., Ltd. and the like are commercially available, and any of them can be used as the resin A2.

As the polyphenylene ether-based resin (PPE), PX100F (glass transition temperature: 204°C) manufactured by Mitsubishi Engineering-Plastics Corporation and the like are commercially available, and can be used as the resin A2.

As the polyphenyl sulfone-based resin (PPSU), Ultrason P (glass transition temperature: 220°C) manufactured by BASF Japan Ltd. and the like are commercially available, as the polysulfone-based resin (PSU), Ultrason S (glass transition temperature: 187°C) manufactured by BASF Japan Ltd. and the like are commercially available, as the polyether sulfone-based resin (PESU), Ultrason E (glass transition temperature: 225°C) manufactured by BASF Japan Ltd. and the like are commercially available, and any of them can be used as the resin A2.

As the polyetherimide-based resin (PEI), ULTEM (glass transition temperature: 215°C) manufactured by Kureha Extron Co., Ltd. and the like are commercially available, and can be used as the resin A2.

[Other resin A3]

The layer A may contain a resin A3 other than the polymer A1 and the resin A2. The other resin A3 may have appropriate compatibility and dispersibility with the polymer A1 and the resin A2. Examples thereof include a 4-methyl-1-pentene-based copolymer such as a copolymer of 4-methyl-1-pentene and $\alpha$-olefin, and polyolefin (including modified polyolefin), and a copolymer of 4-methyl-1-pentene and $\alpha$-olefin is preferable. The copolymer of 4-methyl-1-pentene and $\alpha$-olefin is excellent in that the copolymer does not have a functional group that serves as a reaction point of water molecules, and the dispersibility of the copolymer in the polymer A1 is improved by using the copolymer of 4-methyl-1-pentene and $\alpha$-olefin. Examples of the copolymer of 4-methyl-1-pentene and $\alpha$-olefin include one having the same copolymerization composition as that of the polymer A1 and having a melting point $T_{mA3}$ of lower than 240°C.

Examples of the polyolefin resin include the following polyolefin resins or modified polyolefin resins. In the present specification, the term "modified" refers to one containing a constitutional unit different from a constitutional unit such as a polyolefin in the same molecule.

Examples of the polyolefin resin include polyolefin-based resins such as high density polyethylene, low density polyethylene, ultra-high molecular weight polyethylene, linear low density polyethylene, polypropylene, and poly(1-butene). Other examples thereof include a blend of these polyolefin-based resins or a copolymer containing these polyolefin-based resins as a constituent component. Among these polyolefin-based resins, polypropylene is particularly preferable.

In particular, the same polyolefin resin or modified polyolefin resin can be used when mixed with the 4-methyl-1-pentene-based polymer (polymer A1) by melt kneading, but it is preferable to use a polypropylene resin obtained by copolymerizing 4-methyl-1-pentene or a maleic acid-modified polypropylene resin from the viewpoint of compatibility and the like. As a modification method, graft modification or copolymerization can be used.

Specific examples of the modified polyolefin resin include maleic acid anhydride-modified polyethylene, maleic acid anhydride-modified polypropylene, an ethylene/acrylic acid copolymer, an ethylene/methacrylic acid copolymer, ones wherein a part of or all of the carboxylic acid moiety/moieties in the above copolymer is/are made into a salt with sodium, lithium, potassium, zinc or calcium, an ethylene/methyl acrylate copolymer, an ethylene/ethyl acrylate copolymer, an ethylene/methyl methacrylate copolymer, an ethylene/ethyl methacrylate copolymer, an ethylene/ethyl acrylate-g-maleic acid anhydride copolymer (here, "-g-" stands for graft; hereinafter, it stands for the same), an ethylene/methyl methacrylate-g-maleic acid anhydride copolymer, an ethylene/propylene-g-maleic acid anhydride copolymer, an ethylene/butene-1-g-maleic acid anhydride copolymer, an ethylene/propylene/1,4-hexadiene-g-maleic acid anhydride copolymer, an ethylene/propylene/dicyclopentadiene-g-maleic acid anhydride copolymer, an ethylene/propylene/2,5-norbornadiene-g-maleic acid anhydride copolymer, a hydrogenated styrene/butadiene/styrene-g-maleic acid anhydride copolymer, and a hydrogenated styrene/isoprene/styrene-g-maleic acid anhydride copolymer. Among them, maleic acid-modified polypropylene or an ethylene-propylene copolymer or the like is particularly preferable.

[Other optional components of layer A]

The layer A may contain a crystal nucleating agent that promotes crystallization in order to achieve excellent high-temperature mechanical properties.

From the viewpoint of obtaining an appropriate crystallization promoting effect, the crystal nucleating agent is contained in the layer A in an amount of preferably 0.001% by mass or more and 0.8% by mass or less, more preferably 0.002% by mass or more and 0.5% by mass or less, and still more preferably 0.05% by mass or more and 0.3% by mass or less.

Furthermore, the layer A can contain an appropriate filler as necessary for the purpose of improving lubricity, and the like as long as the object of the present invention is not impaired. As the filler, those conventionally known as a lubricity imparting agent for a film or a sheet can be used. Examples thereof include calcium carbonate, calcium oxide, aluminum oxide, kaolin, silicon oxide, zinc oxide, carbon black, silicon carbide, tin oxide, crosslinked acrylic resin particles, crosslinked polystyrene resin particles, melamine resin particles, and crosslinked silicon resin particles. Furthermore, a coloring agent, an anti-static agent, an antioxidant, an organic lubricant, and a catalyst and the like can also be appropriately added to the layer A. In particular, in consideration of use in a moist-heat environment, an additive having low elutability can be preferably used.

Examples of the other optional components include various additives conventionally used for the 4-methyl-1-pentene-based polymer and the like. Examples of the additives include a stabilizer, an impact improver, a flame retardant, a release agent, a sliding improver, a coloring agent, and a plasticizer.

[Properties of Layer A]

The storage elastic modulus of the layer A measured in a tensile mode at 175°C by a dynamic viscoelasticity measuring machine is preferably more than 80 MPa for at least one direction of the in-plane direction of the film. The storage elastic modulus may be more than 80 MPa for at least one direction, but the storage elastic modulus preferably satisfies this range also for a direction perpendicular to a direction in which the storage elastic modulus is maximized.

Such a storage elastic modulus is preferably 90 MPa or more, more preferably 100 MPa or more, still more preferably 120 MPa or more, and particularly preferably 140 MPa or more, from the viewpoint of improving high-temperature mechanical properties and high-temperature hydrolysis resistance for at least one direction. The storage elastic modulus at 175°C is preferably as large as possible, but the maximum value that can be industrially implemented can be about 500 MPa.

Examples of a method for adjusting the storage elastic modulus include a method for changing the type of the resin A2, a method for changing the content of the resin A2, and a method for changing an air gap distance or a time for passing through an air gap in a producing method described later. In particular, selection of the type of the resin A2 and an increase in the content of the resin A2 are effective.

It is preferable that before and after the layer A is retained at 120°C and 100%RH, a time (durability time) during which the retention rate of a maximum stress measured by a tensile test with respect to an initial value is 60% is 2000 hours or more for at least one direction in the film in-plane direction. The durability time of the layer A may be 2000 hours or more in at least one direction in the film in-plane direction, but the durability time preferably satisfies this range also for a direction perpendicular to a direction in which the durability time is maximized.

In other words, the range of the durability time of the layer A corresponds to that the retention rate of the maximum stress measured by the tensile test with respect to the initial value is 60% or more for at least one direction in the film in-plane direction before and after the layer A is retained at 120°C and 100%RH for 2000 hours.

With regard to the retention rate of the layer A, from the viewpoint of further improving high-temperature hydrolysis resistance, the retention rate is preferably 80% or more, more preferably 90% or more, and still more preferably 93% or more. The retention rate of the layer A is usually 100% or less, and preferably 99% or less. The retention rate of the layer A or the time (durability time) during which the retention rate is 60% can be adjusted by the molecular structure (copolymerization ratio), stereoregularity, melting point, and molecular weight of the polymer A1, and the type and content of the resin A2, and the like.

The thickness of the layer A may be 20 $\mu$m or more, and is preferably 25 $\mu$m or more, more preferably 35 $\mu$m or more, and still more preferably 45 $\mu$m or more, from the viewpoint of obtaining necessary high-temperature mechanical properties. The thickness of the layer A is preferably 300 $\mu$m or less, more preferably 270 $\mu$m or less, and still more preferably 250 $\mu$m or less, from the viewpoint of suppressing the thickness of the fuel cell. In addition, the thickness of the layer A may be 150 $\mu$m or less or 130 $\mu$m or less.

[Layer B (heat-sealable layer)]

The film may include a layer B which is a heat-sealable layer or the like. The layer B which is the heat-sealable layer contains 100 to 70% by mass of a heat-sealable polyolefin B1, and from the viewpoint of moist-heat durability and a bonding force to an adherend, the layer B preferably contains 100 to 75% by mass, more preferably 100 to 80% by mass, still more preferably 100 to 90% by mass, and most preferably 100% by mass of the heat-sealable polyolefin B1. In the present specification, the term "heat-sealable" refers to a property of being sealable to an adherend by heating, and preferably refers to a property of being sealable to SUS316 which is a metal by heating.

The layers B provided on both surfaces of the layer A may have the same composition or different compositions, but for example, when adherends made of the same material are thermally bonded to each other, it is preferable to provide the heat-sealable layers having the same composition on both the surfaces. The thicknesses of the heat-sealable layers may be the same or different from each other, but in the case as described above, it is preferable to provide the heat-sealable layers having the same thickness on both outermost surfaces.

The thickness of the layer B is preferably 100 $\mu$m or less, more preferably 90 $\mu$m or less, and still more preferably 80 $\mu$m or less, from the viewpoint of high-temperature hydrolysis resistance as a reinforcement member and the like. Since a mechanical relaxation function in the thickness direction is weakened as the heat-sealable layer even if the heat-sealable layer is too thin, the thickness of the heat-sealable layer is preferably, for example, 10 $\mu$m or more, more preferably 15 $\mu$m or more, and particularly preferably 20 $\mu$m or more.

[Heat-sealable polyolefin B1]

As a heat-sealable polyolefin B1, an unmodified polyolefin-based resin can be used, but a modified polyolefin is preferable, and a modified polyolefin containing polypropylene is particularly preferable.

Examples of the unmodified polyolefin-based resin include homopolymers and copolymers of an olefin having 2 to 8 carbon atoms, and copolymers of an olefin having 2 to 8 carbon atoms and other monomers. Specifically, for example, polyethylenes such as high density polyethylene (HDPE), low density polyethylene (LDPE), and a linear low density polyethylene resin, polypropylene, polyisobutylene, poly(1-butene), polyvinylcyclohexane, polystyrene, poly(p-methyl-styrene), poly($\alpha$-methylstyrene), an ethylene-propylene block copolymer, an ethylene-propylene random copolymer, an ethylene-butene-1 copolymer, an ethylene-4-methyl-1-pentene copolymer, an ethylene-butene-propylene terpolymer, an ethylene-propylene diene rubber, an $\alpha$-olefin copolymer such as an ethylene-hexene copolymer, an ethylene-vinyl acetate copolymer, an ethylene-acrylic acid copolymer, an ethylene-methyl methacrylate copolymer, an ethylene-vinyl acetate-methyl methacrylate copolymer, a polybutadiene-styrene copolymer, a polybutadiene-maleic anhydride copolymer and an ionomer resin. Furthermore, chlorinated polyolefins obtained by chlorinating these polyolefins can also be used.

As described above, it is possible to use various types of heat-sealable polyolefin resins B1, and it is particularly preferable to use a modified polyolefin resin obtained by introducing various functional groups (for example, a carboxyl group and a hydroxyl group and the like) into a polyolefin resin.

Furthermore, among these modified polyolefin resins, a modified polyolefin resin having an acid value of 1 to 200 mgKOH/g (also referred to as an acid-modified polyolefin resin) and/or a modified polyolefin resin having a hydroxyl value of 1 to 200 mgKOH/g (also referred to as a hydroxyl group-modified polyolefin resin) can be used because adhesion to a metal layer is further improved and electrolyte resistance is excellent.

An acid-modified polyolefin resin is a polyolefin resin having a carboxyl group or a carboxylic anhydride group in the molecule, and is synthesized by modifying a polyolefin with an unsaturated carboxylic acid or a derivative thereof. As this modification method, graft modification or copolymerization can be used.

The acid-modified polyolefin resin is a graft-modified polyolefin obtained by graft-modifying or copolymerizing at least one polymerizable ethylenically unsaturated carboxylic acid or a derivative thereof with a pre-modification polyolefin resin.

Examples of the pre-modification polyolefin resin include the above-mentioned polyolefin resins, and among them, a homopolymer of propylene, a copolymer of propylene and $\alpha$-olefin, a homopolymer of ethylene, and a copolymer of ethylene and $\alpha$-olefin, and the like are preferable. These can be used alone or in combination of two or more.

Examples of the acid-modified polyolefin resin include maleic anhydride-modified polypropylene, an ethylene-(meth)acrylic acid copolymer, an ethylene-acrylic acid ester-maleic anhydride terpolymer, or an ethylene-methacrylic acid ester-maleic anhydride terpolymer. Specifically, the acid-modified polyolefin resin is commercially available as "MODIC" manufactured by Mitsubishi Chemical Corporation, "ADMER" and "UNISTOLE" manufactured by Mitsui Chemicals, Inc., "HARDLEN" manufactured by Toyobo Co., Ltd., "UMEX" manufactured by Sanyo Chemical, Ltd., "REXPEARL EEA" and "REXPEARL ET" manufactured by Japan Polyethylene Corporation, "PRIMACOL" manufactured by Dow Chemical, "NUCLEL" manufactured by Du Pont Mitsui Polychemicals Co., Ltd., and "BONDINE" manufactured by Arkema.

A hydroxyl group-modified polyolefin resin is a polyolefin resin having a hydroxyl group in the molecule, and is synthesized by graft-modifying or copolymerizing a polyolefin with a hydroxyl group-containing (meth)acrylic acid ester or a hydroxyl group-containing vinyl ether described later. Examples of the hydroxyl group-containing (meth)acrylic acid ester include hydroxyethyl (meth)acrylate; hydroxypropyl (meth)acrylate, glycerol (meth)acrylate; lactone-modified hydroxyethyl (meth)acrylate, polyethylene glycol (meth)acrylate, and polypropylene glycol (meth)acrylate, and examples of the hydroxyl group-containing vinyl ether include 2-hydroxyethyl vinyl ether, diethylene glycol monovinyl ether, and 4-hydroxybutyl vinyl ether.

A particularly preferable heat-sealable polyolefin resin is a polyolefin in which the heat-sealable polyolefin B1 contains a modified product modified with an acid anhydride, has an acid anhydride content of 0.1 to 3% by mass, and has an extraction amount of a low molecular weight component having a number average molecular weight of 1000 or less with acetone of less than 1% by mass.

When the anhydride content is 0.1% by mass or more, sufficient adhesion to a metal is easily obtained, and when the anhydride content is 3% by mass or less, sufficient mechanical properties such as rigidity and strength are easily obtained. When the extraction amount of the low molecular weight component is less than 1% by mass, the low molecular weight component is less likely to bleed out to the surface of the heat-sealable layer, and therefore the adhesion is less likely to be inhibited.

[Other resin B2]

The layer B may contain 0 to 30% by mass of other resin B2 other than the heat-sealable polyolefin B1. That is, the heat-sealable layer can contain the other resin B2 having appropriate compatibility or dispersibility with the heat-sealable polyolefin B1 as long as the object of the present invention is not impaired.

However, when the amount of the other resin B2 is too large, the original adhesion force at the time of bonding a metal may be reduced. The layer C which is an easily adhesive layer is provided, to provide an effect of reducing the amount of the other resin component added in the layer B. From such a viewpoint, the upper limit of the amount of the resin B2 contained in the heat-sealable layer is 30% by mass, preferably 25% by mass, more preferably 20% by mass, and particularly preferably 10% by mass. The lower limit of the amount of the resin B2 is not particularly specified, but may be 0% by mass as long as the adhesion force according to the intended use can be secured.

Examples of the resin B2 include polyamide, polyester, polyurethane, a 4-methyl-1-pentene-based polymer (polymer A1), a copolymer C1 (copolymer of 4-methyl-1-pentene and $\alpha$-olefin) described later, polyolefins other than the polymer A1 and the copolymer C1, an ethylene propylene diene rubber, a fluororubber, and a silicone rubber.

The layer B can be composed of only a resin, but a tackifier, an anti-static agent, an antioxidant, a metal deactivator, a dehydrating agent, or a stabilizer such as an antacid adsorbent, or an additive such as a crosslinking agent, a chain transfer agent, a nucleating agent, a lubricant, a plasticizer, a filler, a reinforcing material, a pigment, a dye, or a flame retardant may be added to the layer B as long as the effect of the present invention is not impaired.

[Layer C (easily adhesive layer)]

The film may include a layer C which is an easily adhesive layer or the like. For example, the layer C which is an easily adhesive layer contains a copolymer C1 containing 60 mol% or more and 99 mol% or less of a constitutional unit derived from 4-methyl-1-pentene and 1 mol% or more and 40 mol% or less of a constitutional unit derived from an $\alpha$-olefin having 2 or more and 20 or less carbon atoms other than 4-methyl-1-pentene.

The layer C may contain 100 to 50% by mass of the copolymer C1, but from the viewpoint of enhancing the adhesion force to the layer A and the layer B, the layer C preferably contains 100 to 80% by mass of the copolymer C1, more preferably 100 to 90% by mass, and most preferably 100% by mass.

The layer C may contain 0 to 50% by mass of other resin C2, but from the viewpoint of enhancing the adhesion force to the layer A and the layer B, the layer C preferably contains 0 to 20% by mass of the resin C2, and more preferably 0 to 10% by mass. It is most preferable that the other resin C2 is not contained in the layer C.

The layer C preferably does not contain components other than the resin component, but may contain an antioxidant, a stabilizer, a crosslinking agent, a lubricant, a metal deactivator, and a nucleating agent and the like as long as the effect of the layer C is not impaired.

The layers C provided on both surfaces of the layer A may have the same composition or different compositions, but for example, when heat-sealable layers made of the same material and having the same thickness are provided on both surfaces, it is preferable to provide the layers C having the same composition on both the surfaces. The thicknesses of the layers C may be the same or different from each other, but in the case as described above, it is preferable to provide the layers C having the same thickness on both the surfaces.

The thickness of the layer C is preferably 0.01 $\mu$m or more, more preferably 0.02 $\mu$m or more, and still more preferably 0.03 $\mu$m or more, and is preferably 10 $\mu$m or less, more preferably 5 $\mu$m or less, and still more preferably 1 $\mu$m or less, in order to obtain an appropriate thickness ratio with respect to the layer B.

[Copolymer C1]

The copolymer C1 may be the same as or different from the polymer A1, but from the viewpoint of enhancing the adhesion force to the layer A and the layer B, the mole percent of the constitutional unit derived from 4-methyl-1-pentene constituting the copolymer C1 is preferably lower, more preferably lower by 10 mol% or more, and still more preferably lower by 20 mol% or more than that of the polymer A1.

Examples of the $\alpha$-olefin having 2 or more and 20 or less carbon atoms as the constituent component of the copolymer C1 include ethylene, propylene, 1-butene, 1-hexene, 1-octene, 1-decene, 1-tetradecene, and 1-octadecene. The $\alpha$-olefin is preferably ethylene, propylene, 1-butene, 1-hexene, 1-octene, or 1-decene, more preferably ethylene, propylene, 1-butene, 1-hexene, or 1-octene, and still more preferably ethylene, propylene, 1-butene, or 1-hexene. The $\alpha$-olefins may be used alone or in combination of two or more thereof.

In the copolymer C1, the amount of the constitutional unit derived from 4-methyl-1-pentene is 60 mol% or more and 99 mol% or less, preferably 63 mol% or more and 98 mol% or less, more preferably 65 mol% or more and 95 mol% or less, still more preferably 65 mol% or more and 90 mol% or less, and particularly preferably 65 mol% or more and 87 mol% or less. The amount of the constitutional unit derived from the $\alpha$-olefin having 2 or more and 20 or less carbon atoms other than 4-methyl-1-pentene is 1 mol% or more and 40 mol% or less, preferably 2 mol% or more and 37 mol% or less, more preferably 5 mol% or more and 35 mol% or less, still more preferably 10 mol% or more and 35 mol% or less, and particularly preferably 13 mol% or more and 35 mol% or less. When the amount of the constitutional unit is within the above range, the layer C has a more excellent adhesion force to the layer A and the layer B.

The copolymer C1 may be an amorphous copolymer having no melting point, but a melting point $T_{mC1}$ which is a melting peak temperature measured by a differential scanning calorimeter (DSC) is preferably 199°C or lower, more preferably 100 to 160°C, and still more preferably 110 to 150°C.

As the copolymer C1, it is particularly preferable to use ABSORTOMERS EP1013 and EP1001 manufactured by Mitsui Chemicals, Inc., and the like.

[Other resin C2]

Examples of the other resin C2 of the copolymer C1 include a 4-methyl-1-pentene-based resin, a polyolefin resin, and a polyethylene resin in addition to the polymer A1 and the heat-sealable polyolefin B1.

[Properties as film]

Even when the film of the present invention is formed as a laminated film, it is preferable that the film has the same properties as in the case of only the layer A.

For example, as the laminated film, the time during which the retention rate of the maximum stress measured by the tensile test with respect to the initial value is 60% before and after the laminated film is retained at 120°C and 100%RH is preferably 2000 hours or more for at least one direction in the film in-plane direction. In other words, before and after the laminated film is retained at 120°C and 100%RH for 2000 hours, the retention rate of the maximum stress measured by the tensile test with respect to the initial value is 60% or more for at least one direction of the film in-plane direction, and from the viewpoint of further improving high-temperature hydrolysis resistance, the retention rate is preferably 80% or more, more preferably 90% or more, and still more preferably 93% or more. The retention rate of the laminated film is usually 100% or less, and preferably 99% or less. Since the retention rate and durability time of such a laminated film mainly depend on the properties of the layer A, the retention rate and the durability time can be adjusted by adjusting the properties of the layer A.

When the film of the present invention includes the layer B, the layer C, the layer A, the layer C, and the layer B in this order, it is preferable that, when the film thickness of the layer A is taken as tA, the film thickness of the layer B is taken as tB, and the film thickness of the layer C is taken as tC, the following formulas (1) and (2) are satisfied as the ratios of the thicknesses of the respective layers.

$$2 \leq tA/tB \leq 5 \qquad (1)$$

$$10 \leq tB/tC \leq 5000 \qquad (2)$$

When tA/tB is 5 or less, the total thickness does not become too large, and the sheet is easily cooled during co-extrusion film formation described later, and is easily wound into a roll. When tA/tB is 2 or more, and the heat-sealable layer is melted and bonded to other member, heat is less likely to reach the substrate layer, and the substrate layer is less likely to be affected during bonding. From such a viewpoint, the upper limit of tA/tB is preferably 4.5 or less, more preferably 4.0 or less, and particularly preferably 3.5 or less. The lower limit of tA/tB is preferably 2.2 or more, more preferably 2.4 or more, and particularly preferably 2.5 or more.

When tB/tC is 5000 or less, that is, the easily adhesive layer is not extremely thin as compared with the heat-sealable layer, and the continuity of the film as the easily adhesive layer is easily secured. When tB/tC is 10 or more, it is not necessary to unnecessarily thicken the easily adhesive layer. From such a viewpoint, the upper limit of tB/tC is preferably 4000 or less, more preferably 3000 or less, and particularly preferably 2000 or less. The lower limit of tB/tC is preferably 15 or more, more preferably 20 or more, and particularly preferably 25 or more.

[Method for producing film]

The film of the present invention can be produced, for example, by kneading materials constituting the layer A, extruding the kneaded product, molding a film, and heat-treating the film as necessary. The laminated film can be produced by kneading materials constituting the respective layers, co-extruding the kneaded product, molding the laminated film, and heat-treating the laminated film as necessary. Hereinafter, a case where the film is composed only of the layer A will be described.

A method for mixing and kneading the 4-methyl-1-pentene-based polymer (polymer A1), the resin A2, the resin composed of other polyolefin (other resin A3), and other optional components is not particularly limited, and for example, a single screw extruder, a twin screw extruder, a pressure kneader, and a Banbury mixer and the like can be used. Among these, a twin screw extruder is particularly preferably used. The operating conditions and the like of the twin screw extruder are different depending on various factors such as the type of the resin and the type and amount of each contained component, and cannot be uniquely determined. For example, the operating temperature may be set to about +40°C with respect to the melting point. In the screw configuration of the extruder, kneading discs having excellent kneading are preferably incorporated at several positions.

The resin composition constituting the layer A can be melt-extruded from a die into a sheet, and solidified by cooling with a cooling roll (casting drum) or the like to obtain a film. During melt extrusion, it is also possible to use either a vertical drop type in which a sheet-shaped melt is vertically dropped from a die or an oblique drop type in which a sheet-shaped melt is obliquely dropped from a die, but it is preferable to use a vertical drop type film forming machine from the viewpoint that an air gap distance can be increased.

The air gap distance is preferably 50 mm or more, more preferably 60 mm or more, and still more preferably 70 mm or more, from the viewpoint of efficiently generating crystal nuclei even when the polymer A1 is in a molten state and exhibiting sufficient high-temperature mechanical properties. The air gap distance is preferably 200 mm or less, and more preferably 150 mm or less, from the viewpoint of suppressing thickness unevenness due to the shaking of the molten resin composition before being brought into contact with the cooling roll.

A cooling temperature may be a temperature at which the layers are sufficiently solidified, but is preferably 20 to 120°C, and more preferably 30 to 100°C, from the viewpoint that excessive cooling causes sheet-like resin floating or the like, which makes efficient cooling difficult.

A heat treatment is performed at $T_{mA1}$-100 to $T_{ma1}$-5°C for 1 to 60 seconds with respect to the melting point $T_{mA1}$ of the polymer A1 after solidification by cooling as necessary, and therefore the in-plane deformation rate of the film is easily controlled within a predetermined range. As a method for the heat treatment, a roll conveyance type or a floating type may be used, but a floating type is preferable from the viewpoint of allowing relaxation in the in-plane direction and preventing the sticking of the heat-sealable layers on both the surfaces.

When the film is a laminated film, at least the easily adhesive layer is preferably formed by coextrusion together with the substrate layer, and more preferably, the easily adhesive layer and the heat-sealable layer are formed by coextrusion together with the substrate layer.

When an adhesive layer is subsequently laminated, examples of a lamination method include a dry lamination method and a wet lamination method, and examples of a coating method include an extrusion resin coating method, a molten resin coating method, and a coating liquid coating method.

In the present invention, when the resin is extruded by co-extrusion in order to provide the heat-sealable layer, it is preferable to melt and extrude the resin by appropriately adjusting the melting temperature in accordance with the viscosity of the substrate layer. It is preferable to select the type and molecular weight of the heat-sealable polyolefin B1, and the other resin B2 so that the melt viscosity of the heat-sealable layer becomes appropriate.

Even when the resin is extruded by co-extrusion in order to provide the easily adhesive layer, it is preferable to melt and extrude the resin by appropriately adjusting the melting temperature in accordance with the viscosity of the substrate layer. It is preferable to select the type and molecular weight of the copolymer C1 and the other resin C2 so that the melt viscosity of the easily adhesive layer becomes appropriate.

The operating temperature (melting temperature) of the extruder for the heat-sealable layer is preferably $T_{mB1}$+20°C to $T_{mB1}$+120°C, and more preferably $T_{mB1}$+50°C to $T_{mB1}$+100°C, with respect to the melting point $T_{mB1}$ of the heat-sealable polyolefin B1.

The operating temperature (melting temperature) of the extruder for the easily adhesive layer is preferably $T_{mC1}$+20°C to $T_{mC1}$+120°C, and more preferably $T_{mC1}$+50°C to $T_{mC1}$+100°C, with respect to the melting point $T_{mC1}$ of the copolymer C1.

The discharge amount of the melt of the heat-sealable layer and the easily adhesive layer from the extruder is appropriately determined according to the thickness ratio with respect to the substrate layer, the thickness of the laminated body, and the line speed and the like.

The film as described above can be produced as a roll wound in the machine direction. The film is cut into an appropriate shape, and punched. The resultant can be used for various applications.

The film of the present invention has not only excellent in high-temperature mechanical properties and high-temperature hydrolysis resistance, but also good thickness uniformity and punching processability. Thus, the film can be suitably used for various applications, and particularly can be more suitably used for a reinforcement member for electrolyte membranes of solid polymer fuel cells.

The film of the present invention is effectively used for applications requiring heat resistance, wet heat durability, and the like as applications other than the reinforcement member for electrolyte membranes. Examples of such applications include a carrier film for various steps, a release film for various steps, a film for heat resistant packaging materials, and a film for heat resistant containers. Of course, the film can also be used as other general-purpose films.

[Reinforcement member for electrolyte membranes of solid polymer fuel cells]

The reinforcement member for electrolyte membranes of solid polymer fuel cells of the present invention is a reinforcement member for electrolyte membranes of solid polymer fuel cells for reinforcing an outer peripheral edge portion of a solid polymer electrolyte membrane, and includes the film of the present invention described above.

The reinforcement member for electrolyte membranes of solid polymer fuel cells is only required to reinforce at least the electrolyte membrane of the solid polymer fuel cell, and may be a reinforcement member used for reinforcing an electrolyte membrane-electrode jointed body, a laminated body including a gas diffusion layer, and the like in addition to a case of reinforcing only the electrolyte membrane of the solid polymer fuel cell. The reinforcement member may be referred to as a support member, a gasket member, or the like, and all those having an effect of increasing strength by supporting at least the electrolyte membrane of the solid polymer fuel cell are included in the "reinforcement member".

The shape of the reinforcement member may be any shape as long as the shape reinforces at least one side of the electrolyte membrane of the solid polymer fuel cell, and examples thereof include a frame shape, an L shape, a U shape, and an I shape. However, the shape of the reinforcement member is preferably a frame shape having one or more openings from the viewpoint of enhancing airtightness and a reinforcing effect.

The reinforcement member for electrolyte membranes of solid polymer fuel cells can be fixed to the outer peripheral edge of the electrolyte membrane of the solid polymer fuel cell using an adhesive, a hot melt adhesive, or the like. At that time, when the film of the present invention includes the heat-sealable layer (layer B), the film can be fixed to the outer peripheral edge portion of the electrolyte membrane of the solid polymer fuel cell by heat sealing (hot melt). Since the film of the present invention has excellent high-temperature mechanical properties at 170 to 180°C, the temperature for heat sealing can be set to 150°C or higher.

EXAMPLES

The present invention will be more specifically described by reference to Examples and Comparative Examples. In the present invention, physical properties and the like were measured or evaluated by the following methods. Hereinafter, "parts" means "parts by mass" and "%" means "% by mass" unless otherwise stated.

(1) Average thickness, thickness unevenness

A sample having a width of 2 cm and a length of 10 m in a machine direction was cut out from the center in the transverse direction of a film roll wound into a roll. The thickness of the sample was measured at 100 points in total at intervals of 10 cm in the machine direction using a micrometer. The average thickness and thickness unevenness of the sample were calculated using the following formula.

Average thickness = average value ($\mu$m) of thicknesses at 100 points Thickness unevenness = (maximum value of thicknesses at 100 points - minimum value of thicknesses at 100 points) $\div$ average thickness $\times$ 100 (%)

The thickness unevenness exceeding 5% is apt to cause a problem in various applications, and in particular, when the sample is used for a reinforcement member for electrolyte membranes, the thickness unevenness is preferably 3% or less.

(2) Melting point and glass transition temperature

An aluminum pan enclosing about 10 mg of a resin sample was set in a DSC apparatus (DSC214Polyma manufactured by NETZSCH), the temperature was raised to 300°C at a temperature raising rate of 5°C/min, and a heat flow was measured. From the obtained chart, the inflection point of a baseline shift was read as a glass transition temperature, and the peak top of an endothermic peak was read as a melting point.

(3) Storage elastic modulus at 175°C

A sample was cut into a strip shape having a width of 4 mm and a length of 50 mm so that machine directions were MD and TD, respectively, and measurement was performed under the following conditions using a dynamic viscoelasticity measuring apparatus (Rheogel-E4000 manufactured by UBM Co., Ltd.). Of the storage elastic moduli of MD and TD at 175°C, the larger value was taken as a storage elastic modulus at 175°C.

Measurement mode: tensile
Sample width: 4 mm

Distance between chucks: 20 mm
Measured temperature range: room temperature to 200°C
Temperature raising rate: 2°C/min
Frequency: 1 Hz
Amplitude: 10 $\mu$m
Static load: 100 g

When the storage elastic modulus is 80 MPa or less, high-temperature mechanical properties are apt to be insufficient particularly when the sample is used for the reinforcement member for electrolyte membranes, and the storage elastic modulus is more preferably 90 MPa or more.

(4) Durability time at 120°C and 100%RH, maximum stress retention rate after 2000 hours

A sample was cut out into a strip shape having a width of 15 mm and a length of 120 mm so that a machine direction was MD. The sample was suspended in a PCT tester (Pressure Cooker Test) capable of pressurizing the inside of a tank, and retained at a temperature of 120°C and a relative humidity of 100%RH for 150, 200, 300, 500, 1000, 1500, and 2000 hours.
The initial (PCT untreated) and retained samples were subjected to a tensile test using a tensile tester (Autograph AGS-X manufactured by Shimadzu Corporation) under the following conditions, and a maximum stress obtained before fracture was determined. The maximum stress and a maximum stress retention rate were calculated using the following formulas. A time during which the maximum stress retention rate with respect to the initial value was 60% was determined from the intersection point of the graph plot of a horizontal axis retention time and a vertical axis maximum stress retention rate fitted with a cubic function polynomial and the maximum stress retention rate of 60% of the fitting curve.
Sample width: 15 mm
Distance between chucks: 20 mm
Tensile speed: 200 mm/min Maximum stress = maximum load ÷ sample width before tensile test ÷ sample thickness before tensile test Maximum stress retention rate (%) = tensile maximum stress after PCT test ÷ initial (PCT untreated) tensile maximum stress $\times$ 100

When the maximum stress retention rate is less than 60%, the high-temperature hydrolysis resistance is apt to be insufficient particularly when the sample is used for the reinforcement member for electrolyte membranes, and the maximum stress retention rate is more preferably 80% or more.

(5) Punching processability (burr height)

Holes of $\Phi$ 6.0 mm were made in a film 10 times using a drilling jig (CP-5 manufactured by CARL Corporation), the end of the hole was observed using an optical microscope (RH-2000 manufactured by HIROX Corporation), and the height of burr occurring during punching was measured at a magnification of 35 times. The maximum height of 10 points was taken as a punching burr height ($\mu$m). The burr height exceeding 300 $\mu$m is apt to be a problem in applications involving punching, and it is particularly preferable that the height is 150 $\mu$m or less.

(6) Frequency of black foreign matters

A length of 10 m in the machine direction was visually observed for the entire width of the film roll wound into a roll. The observation was performed under transmitted light, and the number of black foreign matters having a long side of 100 $\mu$m or more that can be visually recognized was counted. The counted number of black foreign matters was converted into the number per unit area and taken as the frequency of black foreign matters (black foreign matters/m$^2$). The frequency of black foreign matters exceeding 20 black foreign matters/m$^2$ is apt to be a problem in various applications, and it is particularly preferable that the frequency is 5 black foreign matters/m$^2$ or less.

[Production Example 1] (PMP1)

According to Production Example 1 and Example 4 of JP-A-2022-171595, a resin (PMP1) having a structural unit derived from 4-methyl-1-pentene of 100 mol% and a melting point of 243°C was produced as follows.

<Preparation of catalyst>

(Production of transition metal compound (A))

According to Synthesis Example 4 of WO 2014/050817 A, (8-octamethylfluorene-12'-yl- (2-(adamantane-1-yl)-8-methyl-3,3b,4,5,6,7,7a,8-octahydrocyclopenta[a]indene))zirconium dichloride (transition metal compound (A)) was synthesized.

(Preparation of solid catalyst component)

In a three-necked 100 mL flask equipped with a stirrer which was sufficiently purged with nitrogen at 30°C, 32 mL of purified decane and 14.65 mmol of solid polymethylaluminoxane (manufactured by Tosoh Finechem Corporation) in terms of aluminum atom were charged under a nitrogen stream to prepare a suspension. To the suspension, 12.75 mL of a 4.6 mmol/L toluene solution containing 50 mg (0.059 mmol in terms of zirconium atoms) of the transition metal compound (A) synthesized above was added with stirring. After 1.5 hours, the stirring was stopped, and the obtained catalyst component was washed 3 times with 50 mL of decane by a decantation method and suspended in decane to obtain 50 mL of a slurry liquid (B). In this catalyst component, a Zr carrying rate was 100%.

(Preparation of prepolymerization catalyst component)

Under a nitrogen stream, 2.0 mL of a decane solution of diisobutylaluminum hydride (2.0 mmol/mL in terms of aluminum atoms) and 7.5 mL (5.0 g) of 4-methyl-1-pentene were charged into the slurry liquid (B) prepared above. After 1.5 hours, the stirring was stopped, and the obtained prepolymerization catalyst component was washed 3 times with 50 mL of decane by a decantation method. The prepolymerization catalyst component was suspended in decane to obtain 50 mL of a decane slurry (C). The concentration of the prepolymerization catalyst component in the decane slurry (C) was 20 g/L, 1.05 mmol-Zr/L, and a Zr recovery rate was 90%.

(Production of polymer PMP1)

Under a nitrogen stream at room temperature, 425 mL of purified decane and 0.5 mL (1 mol) of a decane solution of diisobutylaluminum hydride (2.0 mmol/mL in terms of aluminum atoms) were charged into an SUS polymerization apparatus equipped with a stirrer having an internal volume of 1 L. Then, 0.0005 mmol of the decane slurry solution (C) of the prepolymerization catalyst component prepared above in terms of zirconium atoms was added, and 48 NmL of hydrogen was charged therein. Then, 250 mL of 4-methyl-1-pentene was continuously charged into the polymerization apparatus at a constant speed over 2 hours. This charging start time point was taken as the start of polymerization, and the temperature was raised to 45°C over 30 minutes from the start of polymerization, and then retained at 45°C for 4 hours. After 1 hour and 2 hours from the start of polymerization, 48 NmL of hydrogen was charged. After a lapse of 4.5 hours from the start of polymerization, the temperature was lowered to room temperature, and after depressurization, a polymerization liquid containing a white solid was immediately filtered to obtain a solid substance. This solid substance was dried at 80°C for 8 hours under reduced pressure to obtain a polymer PMP1. The yield was 131 g.

[Example 1]

As raw materials, 95% by mass of PMP1 and 5% by mass of a cyclic olefin-based resin COC1 (TOPAS 6017S manufactured by Polyplastics Co., Ltd., glass transition temperature: 178°C) were blended. Then, the blend was charged into an extruder, and melt-kneaded at a melting temperature of 280°C. A molten resin was extruded into a slit shape from a die lip using a vertical drop type film-forming machine in which arrangement in the vicinity of a die to a cooling roll of a film forming machine was shown in Fig. 1A, and solidified by cooling on a cooling roll set at a surface temperature of 60°C to prepare an unstretched film. A die lip opening degree was 1.0 mm, an air gap distance shown in Fig. 1A was 80 mm, and the rotation speed of the cooling roll was 5.6 m/min. This film was wound into a roll to obtain a film roll. The properties of the obtained film were summarized in Table 1.

[Examples 2 to 9]

Films were obtained in the same manner as in Example 1 except that the raw material blending ratios and the film formation conditions were changed as shown in Table 1 in Example 1. The properties of the obtained films were summarized in Table 1. In Table 1, a polyphenylene ether-based resin PPE is PX100F (glass transition temperature: 204°C) manufactured by Mitsubishi Engineering-Plastics Corporation.

[Comparative Examples 1 and 10]

Films were obtained in the same manner as in Example 1 except that the raw material blending ratios were changed as shown in Table 1 in Example 1. The properties of the obtained films were summarized in Table 2. In Table 2, a polymethylpentene-based resin PMP2 is DX820 (97 mol% of a structural unit derived from 4-methyl-1-pentene, 3 mol% of an $\alpha$-olefin having 10 carbon atoms, melting point: 232°C) manufactured by Mitsui Chemicals, Inc., and a cyclic olefin-based resin COC2 is TOPAS 6015S (glass transition temperature: 158°C) manufactured by Polyplastics Co., Ltd.

[Comparative Example 11]

As in Example 1 of Patent Document 1, a biaxially stretched film (manufactured by Toyobo Co., Ltd., Q5100, thickness: 75 $\mu$m) using polyethylene-2,6-naphthalene dicarboxylate homopolymer (PEN, melting point: 271°C) as a raw material was used. Arrangement in the vicinity of a die to a cooling roll of a film-forming machine was an oblique drop type shown in Fig. 1B, and a die lip opening degree, an air gap distance, a cooling roll rotation speed, and a cooling roll temperature were as shown in Table 1. In a biaxial stretching step, a stretch ratio in a first stage in a film machine direction was 3.7 times, a stretch ratio in a second stage in a film transverse direction was 3.8 times, and a heat setting temperature after the biaxial stretching step was 230°C. The properties of the obtained film were summarized in Table 2.

[Table 1]

| | NAMES OF RAW MATERIALS | UNIT | Example 1 | Example 2 | Example 3 | Example 4 | Example 5 | Example 6 | Example 7 | Example 8 | Example 9 |
|---|---|---|---|---|---|---|---|---|---|---|---|
| RAW MATE-RIAL 3LENDING RATES IN LAYER (A) | PMP1, MELTING POINT: 243°C | % by mass | 95 | 90 | 87 | 85 | 80 | 50 | 95 | 87 | 70 |
| | PMP2 DX820, MELTING POINT: 232°C | % by mass | | | | | | | | | |
| | COC1 TOPAS6017S, GLASS TRANSITION TEMPERATURE: 178°C | % by mass | 5 | 10 | 13 | 15 | 20 | 50 | | | |
| | COC2 TOPAS 6015S, GLASS TRANSITION TEMPERATURE: 158°C | % by mass | | | | | | | | | |
| | PPE PX100F, GLASS TRANSITION TEMPERATURE: 204°C | % by mass | | | | | | | 5 | 13 | 30 |
| | PEN | % by mass | | | | | | | | | |
| FILM FOR-MATION CONDI-TIONS | DIE LIP OPENING DE-GREE | mm | 1.0 | 1.0 | 1.0 | 1.0 | 1.0 | 1.0 | 1.0 | 1.0 | 1.0 |
| | AIR GAP DISTANCE | mm | 80 | 80 | 80 | 80 | 80 | 80 | 80 | 80 | 80 |
| | COOLING ROLL ROTATION SPEED | m/min | 5.6 | 5.6 | 5.6 | 5.6 | 5.6 | 5.6 | 5.6 | 11.2 | 5.6 |
| | COOLING ROLL TEMPERATURE | °C | 60 | 80 | 60 | 60 | 60 | 60 | 60 | 60 | 60 |
| | JNSTRETCHED/BIAXI-ALLY STRETCHED | | UNSTRET-CHED | UNSTRET-CHED | UNSTRET-CHED | UNSTRET-CHED | UNSTRET-CHED | UNSTRET-CHED | UNSTRET-CHED | UNSTRET-CHED | UNSTRET-CHED |
| STORAGE ELASTIC MODULUS AT 175°C | | MPa | 84.5 | 89.2 | 116 | 127 | 159 | 316 | 95.1 | 166 | 317 |
| | | DIRECTION | MD | MD | MD | MD | MD | MD | MD | MD | MD |
| DURABILITY TIME AT 120°C AND 100% RH | | TIME | 2000 OR MORE | 2000 OR MORE | 2000 OR MORE | 2000 OR MORE | 2000 OR MORE | 2000 OR MORE | 2000 OR MORE | 2000 OR MORE | 2000 OR MORE |
| MAXIMUM STRESS RETENTION RATE AFTER 2000 HOURS AT 120°C AND 100%RH | | % | 94 | 92 | 90 | 85 | 80 | 65 | 94 | 90 | 80 |

(continued)

| NAMES OF RAW MATERIALS | UNIT | Example 1 | Example 2 | Example 3 | Example 4 | Example 5 | Example 6 | Example 7 | Example 8 | Example 9 |
|---|---|---|---|---|---|---|---|---|---|---|
| AVERAGE THICKNESS OF FILM | $\mu$m | 150.0 | 149.9 | 150.0 | 151.1 | 149.2 | 149.8 | 150.1 | 75.2 | 150.3 |
| THICKNESS UNEVENNESS | % | 2.0 | 2.1 | 2.2 | 2.5 | 2.7 | 3.5 | 2.5 | 2.5 | 3.0 |
| PUNCHING PROCESSABILITY (BURR HEIGHT) | um | 97 | 110 | 113 | 120 | 133 | 194 | 92 | 112 | 154 |
| FREQUENCY OF BLACK FOREIGN MATTERS | FOREIGN MATTERS/m2 | 0 | 0 | 0 | 1 | 1 | 3 | 1 | 2 | 10 |

[Table 2]

| | NAMES OF RAW MATERIALS | UNIT | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|
| RAW MATERIAL 3LENDING RATES IN LAYER (A) | PMP1, MELTING POINT: 243°C | % by mass | 100 | 97 | 45 | | | | | | | 80 | |
| | PMP2 DX820, MELTING POINT: 232°C | % by mass | | | | 85 | 80 | 50 | 80 | | | | |
| | COC1 TOPAS6017S, GLASS TRANSITION TEMPERATURE: 178°C | % by mass | | 3 | 55 | 15 | 20 | 50 | | 100 | | | |
| | COC2 TOPAS 6015S, 3LASS TRANSITION TEMPERATURE: 158°C | % by mass | | | | | | | 20 | | | 20 | |
| | PPE PX100F, GLASS TRANSITION TEMPERATURE: 204°C | % by mass | | | | | | | | | 100 | | |
| | PEN | by mass | | | | | | | | | | | 100 |
| FILM FORMATION CONDITIONS | DIE LIP OPENING DEGREE | mm | 1.0 | 1.0 | 1.0 | 1.0 | 1.0 | 1.0 | 1.0 | 1.0 | 1.0 | 1.0 | 4.0 |
| | AIR GAP DISTANCE | mm | 80 | 80 | 80 | 80 | 80 | 80 | 80 | 80 | 80 | 80 | 30 |
| | COOLING ROLL ROTATION SPEED | m/min | 5.6 | 5.6 | 5.6 | 5.6 | 5.6 | 5.6 | 5.6 | 5.6 | 5.6 | 5.6 | 4.9 |
| | COOLING ROLL TEMPERATURE | °C | 60 | 60 | 60 | 60 | 60 | 60 | 60 | 60 | 60 | 60 | 55 |
| | UNSTRETCHED/- BIAXIALLY STRETCHED | | UNSTRETCHED | UNSTRETCHED | UNSTRETCHED U | UNSTRETCHED | UNSTRETCHED | UNSTRETCHED | UNSTRETCHED | UNSTRETCHED | UNSTRETCHED | UNSTRETCHED | BIAXIALLY STRETCHED |
| STORAGE ELASTIC MODULUS AT 175°C | | MPa | 50.8 | 61.8 | 343 | 120 | 157 | 310 | 42.5 | 1390 | 1160 | 45.2 | 854 |
| | | DIRECTION | MD | MD | MD | MD | MD | MD | MD | MD | MD | MD | TD |
| DURABILITY TIME AT 120°C AND 100%RH | | TIME | 2000 OR MORE | 2000 OR MORE | 1800 | 2000 OR MORE | 2000 OR MORE | 2000 OR MORE | 2000 OR MORE | 1200 | 2000 OR MORE | 2000 OR MORE | 185 |

EP 4 651 244 A1

18

(continued)

| NAMES OF RAW MATERIALS | UNIT | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| MAXIMUM STRESS RETENTION RATE AFTER 2000 HOURS AT 120°C AND 100%RH | % | 96 | 95 | 55 | 94 | 85 | 65 | 85 | UNMEASURABLE | 70 | 85 | UNMEASURABLE |
| AVERAGE THICKNESS OF FILM | μm | 150.1 | 150.1 | 150.8 | 150.1 | 150.5 | 150.1 | 149.9 | 150.4 | 150.4 | 150.0 | 75.0 |
| THICKNESS UNEVENNESS | % | 2.1 | 2.1 | 3.9 | 5.3 | 6.0 | 7.3 | 8.0 | 3.6 | 4.7 | 2.9 | 2.0 |
| PUNCHING PROCESSABILITY (BURR HEIGHT) | μm | 80 | 90 | 220 | 123 | 133 | 190 | 130 | 355 | 149 | 132 | 81 |
| FREQUENCY OF BLACK FOREIGN MATTERS | FOREIGN MATTERS/m2 | 0 | 0 | 3 | 1 | 1 | 3 | 1 | 4 | 1251 | 1 | 0 |

As is apparent from Table 1, in Examples 1 to 9, the specific polymethylpentene-based resin and the resin having a glass transition temperature of 170°C or higher were used at a specific mass ratio, and thus films having not only excellent high-temperature mechanical properties and high-temperature hydrolysis resistance but also good thickness uniformity and punching processability were obtained. The frequency of black foreign substances was greatly improved as compared with the case of using the polyphenylene ether-based resin PPE alone.

Meanwhile, as shown in Table 2, in Comparative Examples 1 and 2 in which the content of the polymethylpentene-based resin was too large, the storage elastic moduli at 175°C were insufficient. In Comparative Example 3 in which the content of the polymethylpentene-based resin was too small, the high-temperature hydrolysis resistance was insufficient.

In Comparative Examples 4 to 6 in which the polymethylpentene-based resin having a melting point of lower than 240°C and the cyclic olefin-based resin having a glass transition temperature of 170°C or higher were blended, a problem of thickness unevenness occurred. Also in Comparative Example 7 in which the cyclic olefin-based resin having a glass transition temperature of lower than 170°C was blended, the thickness unevenness was similarly large, and the storage elastic modulus at 175°C was insufficient.

In Comparative Example 8 in which the cyclic olefin-based resin having a glass transition temperature of 170°C or higher was used alone, the high-temperature hydrolysis resistance was insufficient, and the punching processability was also deteriorated. In Comparative Example 9 in which the polyphenylene ether-based resin having a glass transition temperature of 170°C or higher was used alone, the frequency of black foreign substances was remarkably deteriorated.

Meanwhile, in Comparative Example 10 in which the polymethylpentene-based resin having a melting point of 240°C or higher and the cyclic olefin-based resin having a glass transition temperature of lower than 170°C were blended, the storage elastic modulus at 175°C was insufficient. In Comparative Example 11 using the biaxially stretched PEN film, a time during which a maximum stress retention rate after retaining at 120°C and 100%RH was 60% was short, and the film was broken after retaining for 2000 hours, so that the tensile test could not be performed.

INDUSTRIAL APPLICABILITY

The film of the present invention has not only excellent high-temperature mechanical properties and high-temperature hydrolysis resistance, but also good thickness uniformity and punching processability. Therefore, the film can be suitably used for various applications, and particularly, the film can be suitably used for a reinforcement member for electrolyte membranes of solid polymer fuel cells. Therefore, the film has high industrial applicability.

DESCRIPTION OF REFERENCE SIGNS

1 Die
2 Resin
3 Cooling roll
D Air gap distance

**Claims**

1. A film comprising at least one layer A that contains a polymer A1 containing 90 mol% or more of a structural unit derived from 4-methyl-1-pentene with respect to all units and having a melting point of 240°C or higher and a resin A2 having a glass transition temperature of 170°C or higher in a total amount of 90% by mass or more, wherein a mass ratio A1/A2 of the polymer A1 to the resin A2 is within a range of 95/5 to 50/50.

2. The film according to claim 1, wherein before and after the layer A is retained at 120°C and 100%RH, a time during which a retention rate of a maximum stress measured by a tensile test with respect to an initial value is 60% is 2000 hours or more for at least one direction in a film in-plane direction.

3. The film according to claim 1, wherein the resin A2 is a cyclic olefin-based resin.

4. The film according to claim 1, wherein the mass ratio A1/A2 is within a range of 95/5 to 87/13.

5. The film according to claim 1, further comprising at least one heat-sealable layer.

6. The film according to claim 1, wherein the film is used for a reinforcement member for electrolyte membranes of solid polymer fuel cells for reinforcing an outer peripheral edge portion of an electrolyte membrane of a solid polymer fuel cell.

7. A reinforcement member for electrolyte membranes of solid polymer fuel cells for reinforcing an outer peripheral edge portion of an electrolyte membrane of a solid polymer fuel cell, the reinforcement member comprising the film according to any one of claims 1 to 6.

[Figure 1]

[Figure 2]

**EP 4 651 244 A1**

## INTERNATIONAL SEARCH REPORT

International application No.

**PCT/JP2023/033528**

| A. | CLASSIFICATION OF SUBJECT MATTER |
|---|---|

*H01M 8/0284*(2016.01)i; *B32B 27/32*(2006.01)i; *C08J 5/18*(2006.01)i; *C08L 23/20*(2006.01)i; *C08L 101/00*(2006.01)i; *H01M 8/0273*(2016.01)i; *H01M 8/10*(2016.01)i
FI: H01M8/0284; B32B27/32 103; C08J5/18 CES; C08L23/20; C08L101/00; H01M8/0273; H01M8/10 101

According to International Patent Classification (IPC) or to both national classification and IPC

| B. | FIELDS SEARCHED |
|---|---|

Minimum documentation searched (classification system followed by classification symbols)
H01M8/0284; B32B27/32; C08J5/18; C08L23/20; C08L101/00; H01M8/0273; H01M8/10

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2016-210129 A (DAICEL CORP.) 15 December 2016 (2016-12-15) <br> paragraphs [0022]-[0146] | 1-7 |
| A | WO 2022/044402 A1 (DAICEL CORP.) 03 March 2022 (2022-03-03) <br> paragraphs [0021]-[0137] | 1-7 |
| A | JP 2009-279838 A (POLYPLASTICS CO., LTD.) 03 December 2009 (2009-12-03) <br> paragraphs [0019]-[0069] | 1-7 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 November 2023** | **28 November 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/033528**

| Patent document cited in search report | | | Publication date (day/month/year) | Patent family member(s) | Publication date (day/month/year) |
|---|---|---|---|---|---|
| JP | 2016-210129 | A | 15 December 2016 | (Family: none) | |
| WO | 2022/044402 | A1 | 03 March 2022 | EP 4159435 A1 paragraphs [0021]-[0137]<br>JP 2022-38254 A<br>CN 115803193 A<br>KR 10-2023-0057407 A | |
| JP | 2009-279838 | A | 03 December 2009 | (Family: none) | |

Form PCT/ISA/210 (patent family annex) (January 2015)

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4944419 B
- JP 2021194871 A
- JP 2009279838 A
- JP 2018135467 A
- JP 2022171595 A
- WO 2014050817 A